**Europäisches Patentamt**

(19) **European Patent Office**

**Office européen des brevets**

(11) Numéro de publication: **0 120 753**
**A1**

(12) # DEMANDE DE BREVET EUROPEEN

(21) Numéro de dépôt: **84400430.9**

(22) Date de dépôt: **05.03.84**

(51) Int. Cl.³: **B 60 H 3/00**
**B 60 H 1/00**

(30) Priorité: **04.03.83 FR 8303582**

(43) Date de publication de la demande:
**03.10.84 Bulletin 84/40**

(84) Etats contractants désignés:
**AT BE CH DE GB IT LI LU NL SE**

(71) Demandeur: **Mattei née Loubet, Eliane Michèle**
**11bis rue Chevalier**
**F-94210 La Varenne St Hilaire(FR)**

(72) Inventeur: **Mattei née Loubet, Eliane Michèle**
**11bis rue Chevalier**
**F-94210 La Varenne St Hilaire(FR)**

(74) Mandataire: **Viard, Jean**
**Cabinet VIARD 28 bis, avenue Mozart**
**F-75016 Paris(FR)**

(54) **Conditionneur d'air pour cabine de travail en atmosphère polluée.**

(57) Dispositif de protection pour travail en atmosphère pollué notamment dans les cabines de conduite de tracteurs agricoles épandant des produits chimiques dangereux.

Selon l'invention, ce dispositif inclût des moyens de filtration, de pressurisation (1) et au moins une sonde électronique (13) pour détecter le taux de toxicité qui est affiché sur un panneau (16).

Application: accroissement de la sécurité dans l'épandage des produits chimiques.

EP 0 120 753 A1

FIG.1

# CONDITIONNEUR D'AIR POUR CABINE DE TRAVAIL EN ATMOSPHERE POLLUEE -

La présente invention concerne un conditionneur d'air pour cabine de travail en atmosphère polluée du type comprenant un bloc de traitement de l'air monté ou incorporé au toit de la cabine, ce bloc étant équipé intérieurement d'au moins un élément de filtration grossière, d'un élément de filtration physique fine, d'un élément de filtration chimique et d'un groupe moto-ventilateur disposé en aval des éléments de filtration, ce dispositif incluant un équipement de contrôle de pressurisation à l'intérieur de la cabine.

Un tel dispositif est décrit dans le brevet français N° 81 04 471.

On connait par ailleurs par le brevet DE-A-416 805 un dispositif de protection contre la pollution comprenant des éléments physiquement filtrants et un capteur disposé à l'extérieur du véhicule. Lorsque le capteur détecte une pollution extérieure, il agit sur des trappes qui isolent l'intérieur de l'habitacle de l'air extérieur, l'air intérieur étant recyclé pendant le temps de la pollution. Un tel dispositif ne peut avoir qu'un fonctionnement temporaire et ne convient pas au travail en atmosphère polluée, tel que par exemple l'épandage de produits chimiques toxiques.

Un autre dispositif permettant le travail en atmosphère polluée est décrit dans le brevet français n° 82 03 663 au nom de la demanderesse. Le dispositif décrit dans ce brevet présente l'ensemble des éléments de filtration mentionnés dans le préambule et il est caractérisé en ce qu'il est prévu un détecteur de toxicité disposé à l'intérieur de la cabine, composé de plusieurs pastilles de réactif possédant la faculté de changer de couleur à partir d'un certain seuil de présence de corps chimiques polluants à

2    **0120753**

l'intérieur de la cabine. Chaque pastille correspond
à un corps déterminé d'emploi courant en agriculture.
Malheureusement, la réaction des pastilles à la pollution
est relativement lente de sorte que ces détecteurs ne peuvent
pas signaler rapidement une montée brusque du taux de
toxicité.

Un premier objet de la présente invention est un dispositif de protection muni de moyens de détection électroniques
dont la réponse à une modification de l'atmosphère interne
à la cabine est instantanée. De plus, contrairement aux
pastilles, les détecteurs se régénèrent automatiquement
ce qui élimine une servitude.

Le dispositif selon le brevet précité, bien que d'une
bonne fiabilité, a rencontré toutefois certaines réticences de la part d'utilisateurs peu conscients des
dangers qu'ils courent lors de l'épandage de produits
dangereux pour leur santé. Outre un sentiment de claustration parfois traumatisant, certains utilisateurs se
sont plaints d'un froid ou d'une chaleur excessifs,
notamment au fait que les

cabines de tracteurs présentent de grandes surfaces vitrées, lorsque les conditions atmosphériques sont sévères.

Un second objet de la présente invention est de permettre une climatisation efficace quelles que soient les conditions atmosphériques, afin que le conducteur puisse rester enfermé sans subir les rigueurs du temps.

Par ailleurs, dans le brevet précité, l'air extérieur est aspiré et traité en permanence. Or, l'existence d'une surpression n'est indispensable que lors de l'épandage de produits dangereux. La présente invention permet de définir deux régimes de fonctionnement du dispositif de protection. Le premier régime dit "Confort", utilisé lors des transports ou lors de l'exécution de travaux non dangereux consiste en un recyclage de l'air de la cabine, ce qui permet d'épargner les filtres. Le second régime dit "de Sécurité" implique une aspiration de l'air extérieur et le traitement de celui-ci avec création d'une surpression à l'intérieur de la cabine. Cette pressurisation n'existe pas lors du régime "Confort" compte tenu de ce que les cabines ne sont pas étanches.

De plus, dans le souci d'assurer une sécurité supplémentaire au conducteur, l'invention prévoit de répartir l'air après filtration de sorte qu'il forme, grâce à un diffuseur spécial, un rideau d'air, isolant, en régime dynamique, le conducteur du volume total de la cabine dans laquelle il se trouve.

Selon la présente invention, le dispositif de protection pour travail en atmosphère polluée, monté ou intégré au toit d'une cabine de véhicule, du type comportant dans un caisson étanche, ouvert à sa partie avant et communiquant à sa partie arrière avec l'intérieur de la cabine, un ensemble de filtration et un groupe turbo-ventilateur disposé en aval de l'ensemble de filtration et en amont de la cabine, un volumètre à accumulation et un détecteur de toxicité, est caractérisé en ce que le détecteur de toxicité comprend au moins une sonde à semiconducteur, reliée à un ensemble multiplexeur lui-même connecté à un panneau d'affichage .

La sonde semi-conductrice est disposée à l'intérieur de la cabine. Elle consiste en une diode, incluant une résistance chauffante de regénration, dont l'immersion dans un milieu pollué provoque par une réaction physicochimique une variation d'impédance, variation dont l'amplitude varie d'une part avec la nature de l'agent polluant ou produit toxique adsorbé et, d'autre part, avec le taux de matière toxique dans le milieu ambiant. On sait qu'avec les produits les plus courants en agriculture la limite de toxicité à ne pas dépasser varie de 50 à 400 $\mu$g environ par m3. Il convient donc de moduler l'information reçue par un paramètre qui est fonction du taux d'adsorption du produit épandu à un moment donné. C'est le rôle du multiplexeur dûment étalonné de fournir à l'affichage une réponse dépendante de la matière épandue.

Selon une autre caractéristique de la présente invention, le caisson renfermant les éléments filtrants inclût également le condenseur d'un appareil de climatisation dont le compresseur est entraîné par le groupe moteur du véhicule sur lequel est monté la cabine. Par ailleurs, le caisson contient également un radiateur relié au circuit de refroidissement du véhicule. On obtient ainsi une climatisation efficace qui ne peut être obtenue, compte-tenu des forts volumes d'air à traiter, par les climatiseurs d'automobile. Il serait également possible d'assurer la climatisation par la transformation momentanée de l'évaporateur en condenseur mais celà obligerait à prévoir des vannes de renversement de cycle à plusieurs voies pour le fréon qui est habituellement le fluide caloporteur de ce type d'installation.

Selon encore une autre caractéristique de l'invention, le caisson étanche contenant les éléments de filtration est muni, à sa partie avant, d'un ensemble de volets articulés, commandés par un vérin ou électro-aimant permettant d'isoler l'intérieur du caisson de l'extérieur, un second vérin ou électro aimant commandant l'ouverture d'un conduit de recyclage lorsque lesdits volets sont fermés. Ces commandes permettent de passer manuellement ou automatiquement de la position "confort" à la position "sécurité", en fonction des consignes et des indications fournies par les capteurs de concentration et de pressurisation.

D'autres caractéristiques et avantages de l'invention apparaîtront au cours de la description qui va suivre de modes particuliers de réalisation de l'invention, donnés uniquement à titre d'exemples non limitatifs, en regard des figures qui représentent :

- la Fig.1, un schéma électrique du dispositif (version surveillance automatique) ;
- la Fig. 2, une vue en coupe du caisson et du toit de la cabine du véhicule ;
- la Fig. 3, une vue en perspective du diffuseur d'air à l'intérieur de la cabine ;
- la Fig. 4, une vue en perspective du caisson ;
- la Fig. 5, une vue du tableau de bord, sous forme de bandeau, de commande du dispositif ;
- les Figs 6 et 7, des ordinogrammes pour la commande du dispositif selon l'invention par un microprocesseur, respectivement en ce qui concerne le contrôle de pression et le contrôle de toxicité.

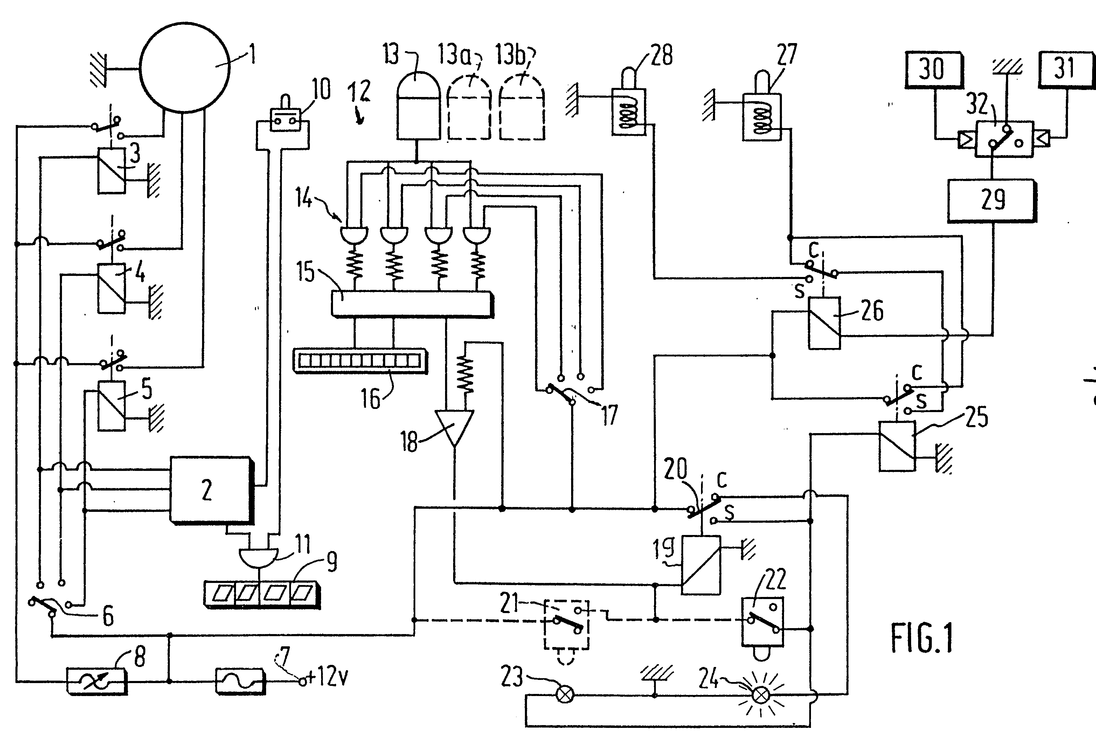

La Fig. 1, est un schéma électrique du circuit de commande du dispositif permettant un fonctionnement soit manuel, soit automatique de celui-ci. On y voit, de la gauche vers la droite, le motoventilateur 1 ou plus exactement son moteur relié au pôle 7 de la batterie du véhicule par un ensemble de trois circuits dont les fermetures sont commandées par des relais 3,4 et 5. Ces circuits incluent des résistances (non représentées) de valeurs différentes ce qui permet d'appliquer sur la borne d'entrée du moteur 1 des tensions différentes et par suite de faire tourner celui- ci à des vitesses différentes, le moteur étant par ailleurs relié à la masse. Le choix des vitesses d'aspiration dépend ainsi de la position du commutateur 6 qui est à la disposition du conducteur qui procède aux réglages adéquats. La tension appliquée peut par ailleurs être ajustée éventuellement à l'aide d'un rhéostat 8. En dérivation sur les circuits précédents est branché un "volumètre" 2 connecté par l'intermédiaire d'une entrée d'une porte "ET" 11 à un tableau d'affichage 9 à diodes, par exemple. Sur la seconde entrée de la porte 11 est connecté un contacteur 10 indicateur de la présence ou non de la cellule de filtration. Ainsi, le volumètre ne fonctionne que lorsqu'une cellule de filtration est en place. Pratiquement, le volumètre n'est qu'un compteur qui indique la consommation de courant électrique, mais puisque cette consommation est proportionnelle à la vitesse de rotation du motoventilateur, donc à l'air effectivement aspiré, cette grandeur donne une mesure du débit cumulé de l'air dans la cabine. L'étage suivant constitue le "toximètre" désigné d'une manière générale par la référence 12. Il se compose au moins d'une sonde 13 reliée par un ensemble de portes 14 à un circuit de traitement 15, dont au moins une sortie est reliée à un tableau d'affichage à diodes 16. La sélection des portes 14 se fait grâce à un commutateur 17, l'ensemble étant alimenté par la source de tension 7. La sonde 13 est constituée essentiellement par une diode semiconductrice incluant une résistance de chauffage. Elle est disposée à l'intérieur de la cabine. La présence éventuelle des sondes 13a et 13b représentées en pointillés sera expliquée ci-après. La surface supérieure de la diode est à l'air libre dans la cabine de sorte qu'elle peut adsorber les ions résultant de la présence de corps toxiques déterminés. Comme il a été dit ci-dessus, le taux d'adsorptic de ces ions dépend de la nature du produit à détecter. Par suite, il est nécessaire d'étalonner les circuits en fonction de la nature des produits et c'est le rôle des résistances incluses dans les circuits de sortie des portes 14. De la sorte, les signaux provenant de la sonde 13 arrivent sur l'étage de traitement avec un même niveau. Le sélecteur 17 est donc placé dans une position qui correspond à un type de produit donné avant le début de l'opération d'épandage.

A la sortie du circuit de traitement 15 est également branché un amplificateur de puissance 18 dont la sortie est appliquée sur l'électrode de commande d'un relais 19 commandant la position d'un contacteur 20. Ce contacteur détermine automatiquement la mise en position du dispositif soit en position "confort" soit en position "sécurité. Le schéma représente un dispositif automatique. Dans une autre version, dite manuelle, le relais 20 est commandé par deux interrupteurs respectivement 21 et 22 manuels de commande de l'une des deux positions. Dans ce cas, l'amplificateur 18 est supprimé. Ces interrupteurs et leur branchement sont représentés en traits pointillés sur la Fig. 1. Dans une autre version, les deux interrupteurs 21 et 22 à auto-alimentation peuvent être remplacés par un seul sélecteur à deux positions.

La position du contacteur 20 commande un ensemble de fonctions permettant d'agir sur des éléments électromécaniques du dispositif. Les voyants 23 et 24, situés sur le tableau de bord, à l'intérieur de la cabine indiquent à tout moment le régime de fonctionnement du dispositif. Ces voyants sont connectés en parallèle sur les relais 25 et 26 qui commandent les électro-aimants 27 et 28 de "confort" et de "sécurité" respectivement.

Sur la Fig.1, la position des relais ou contacteurs correspond au régime "confort" c'est à dire que le relais 27 est armé alors que les relais 25,26 et 28 sont à l'état de repos. Lors du fonctionnement en régime "sécurité" le pressostat différentiel 29,30,31 et 32 alimente l'électro-aimant 26, seulement si la pression extérieure est supérieure à la pression intérieure. Dès que la pression intérieure devient supérieure à la pression extérieure alors le pressostat cesse d'alimenter le relais 26 et l'électro "sécurité" cesse d'être alimenté ; les volets extérieurs se ferment automatiquement, l'électro aimant 27 est actionné et on fonctionne en "recyclage" ce qui économise les filtres et augmente les performances du conditionnement d'air.

Le pressostat est composé d'une prise de pression extérieure 30, d'une prise de pression intérieure 31 et d'un étage comparateur 32 dont la sortie est connectée à un étage temporisateur 29. Comme il a déjà été dit, la surpression à maintenir dans la cabine est de un ou quelques millimètres de colonne d'eau. La temporisation 29 évite le pompage du système dans la mesure où elle maintient l'aspiration d'air extérieur pendant un certain temps après que la différence de pression désirée ait été atteinte.

En régime "confort" l'air est automatiquement renouvelé par ouverture des volets 33 et fermeture de la trappe 41 périodiquement et par exemple tous les quarts d'heures.

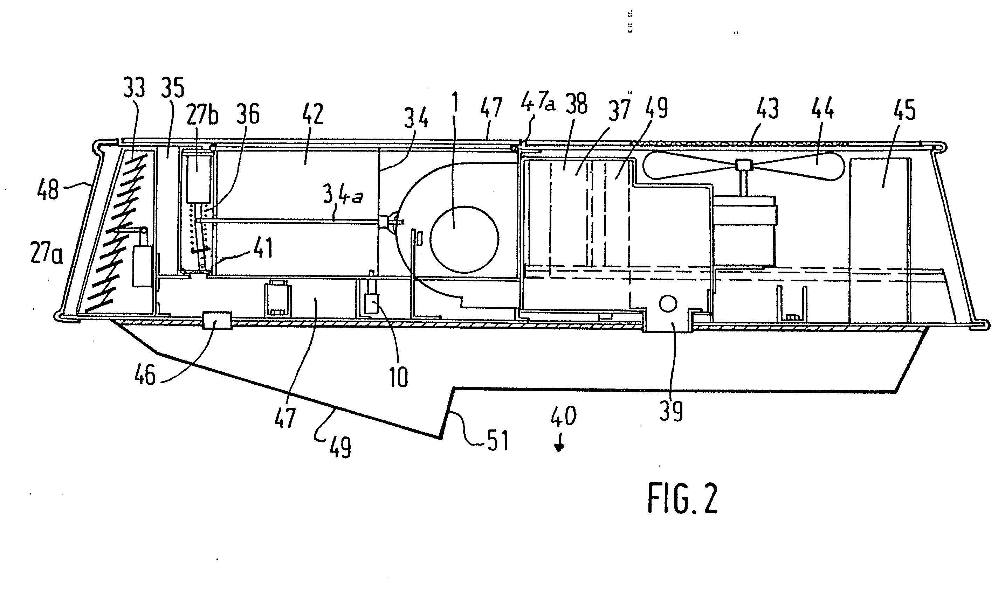

La Fig.2 représente le caisson qui est soit intégré au toit de la cabine du véhicule, soit fixé au dessus de celui-ci, le carter latéral ayant été retiré. La face ouverte est obturée par une grille 48 qui effectue une filtration grossière des gros éléments telles que des brindilles. Derrière cette grille sont disposés des volets 33 montés pivotants autour d'axes horizontaux manoeuvrés par un vérin 27a lui-même commandé par le relais 27 (Fig.1). Derrière les volets 33 on trouve d'une part le filtre physique 35 suivi d'une chambre 36 à l'intérieur de laquelle se trouve un second vérin 27b dont la fonction est d'ouvrir ou de fermer une trappe 41 mettant en communication l'intérieur de la cabine et la chambre 36. Ce montage permet une filtration de l'air de recyclage par le filtre 34.
A l'opposé du filtre physique par rapport à la chambre 36
se trouve, à l'intérieur d'un cadre rigoureusement
étanche, le filtre chimique 34 qui est solidement arrimé
sur le bâti à l'intérieur de la chambre 36 par deux
tirants 34a. Il est en effet essentiel qu'aucune fuite
ne se produise par l'extérieur du filtre 34 car les
produits toxiques pourraient pénétrer à l'intérieur de
la cabine sans passer par les filtres. Derrière le filtre
chimique se trouve un turbo-ventilateur 1 qui est
entraîné en rotation comme décrit en regard de la Fig.1.
On retrouve sur cette figure le contacteur de présence de
cellule filtrante 10 représenté sur la Fig.1.
La sortie du moto-ventilateur 1 débouche dans une
chambre 38 qui inclût un élément radiateur 49 relié au
circuit de refroidissement du moteur du véhicule et d'un
évaporateur 37 qui appartient au circuit d'un climatiseur
dont d'autres éléments seront décrits par la suite. La
chambre 38 débouche dans la cabine 40 par au moins une
canalisation 39. Le caisson renferme ainsi des moyens de
fitlration physique 35 et chimique 34, ce dernier filtre
étant avantageusement constitué de charbon actif.
A l'extérieur du caisson étanche, mais faisant partie du
dispositif se trouvent un ventilateur 44 et un échangeur
de chaleur 45 ou condenseur, qui appartiennent, comme
l'évaporateur 37 au circuit d'un climatiseur dont le
compresseur est entraîné par le moteur du véhicule et se
trouve à la partie inférieure du châssis (non représentée).
La connexion du circuit de fréon se fait au moyen de deux
embouts à raccords automatiques (non représentés) ce qui
évite à l'utilisateur toute manipulation de ce produit
délicat. L'air filtré peut ainsi, à volonté, être
réchauffé par le radiateur 49 ou refroidi par passage sur
l'évaporateur 37.

Le plafond de la cabine 40 est également percé par un second
conduit 46 qui débouche dans une chambre 47. En position
de sécurité, cette chambre est close et l'air aspiré s'échappe de la cabine par les ouvertures naturelles de celle-ci tout en assurant la surpression nécessaire à l'isolation de la cabine par rapport à l'air ambiant qui peut être pollué. Dans le régime "confort" la trappe 41 est ouverte alors que les volets 33 sont fermés. L'air intérieur de la cabine 40 est alors recyclé, par passage à travers le conduit 46. La filtration physique n'est pas nécessaire puisqu'il s'agit d'air déjà filtré qui ne repasse, à titre de sécurité, qu'à travers le filtre chimique. Bien entendu, cette position "confort" ne doit être utilisée qu'en l'absence de produits toxiques. Elle permet au conducteur du tracteur de bénéficier de la climatisation tout en ne causant pas d'obstruction des filtres. Dans la version à micro-processeur, le passage de la position "confort" à "sécurité" est automatique car la "veille" extérieure est assurée par un capteur de détection.

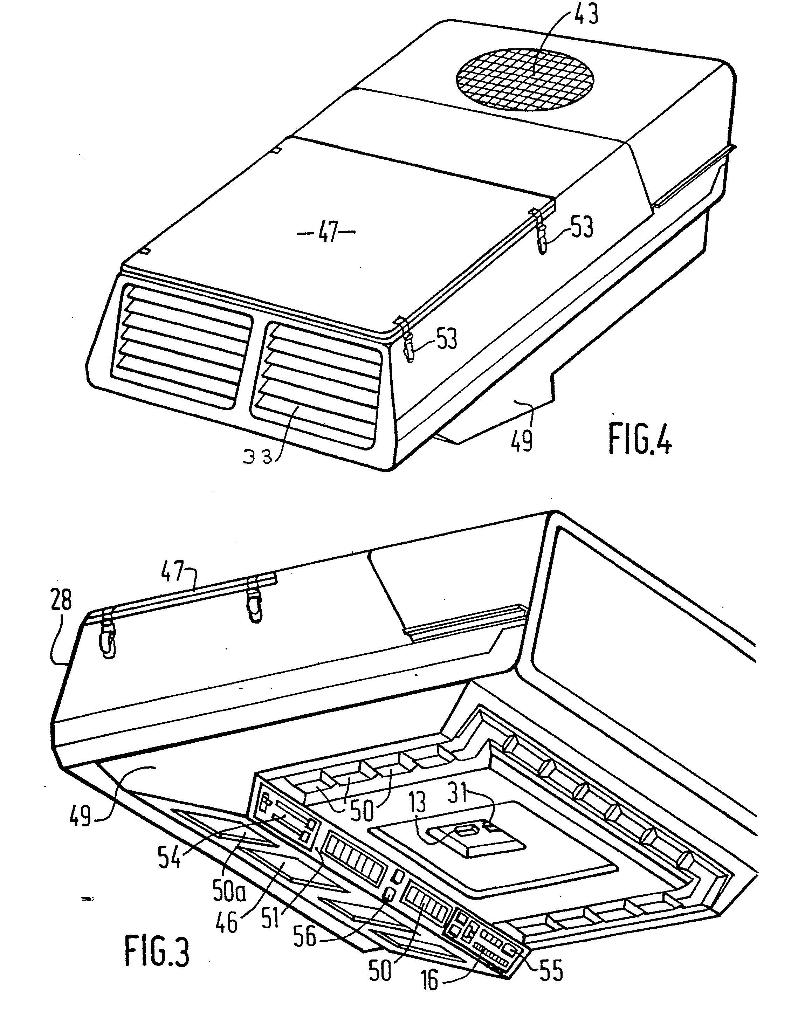

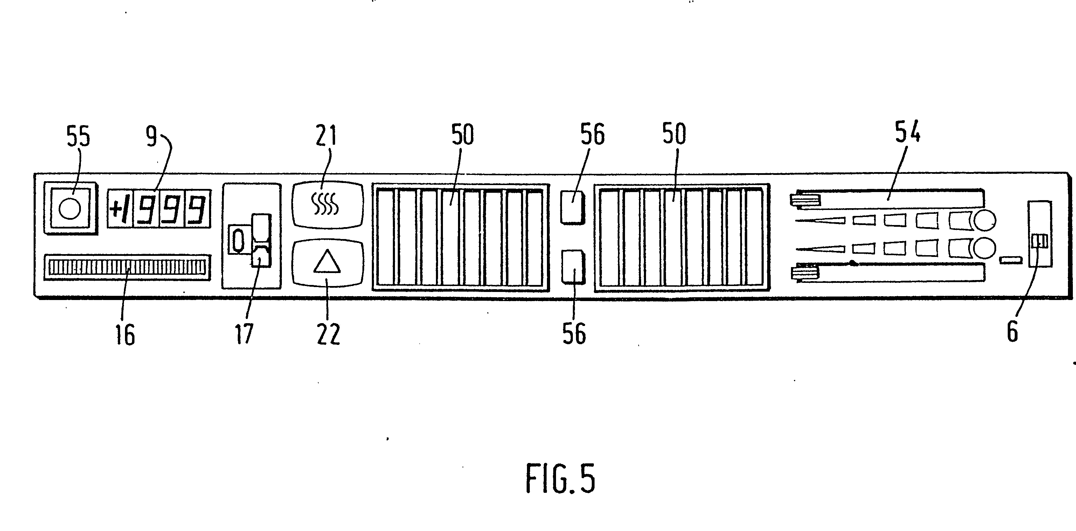

Selon une caractéristique de l'invention, l'air filtré ne pénètre pas directement dans la cabine mais le conduit 39 est raccordé à un diffuseur de forme générale carrée qui apparaît en perspective sur la Fig.3. Ce diffuseur 49 assure une répartition déterminée de l'air à l'intérieur de la cabine par un ensemble de buses 50 réparties autour de la partie du diffuseur surmontant la tête du conducteur. La surpression de l'air à l'intérieur du diffuseur 49 est suffisante pour que l'air s'échappe perpendiculairement au plan de ce diffuseur de manière à constituer un rideau d'air au moins au niveau du visage du conducteur. Les orifices 50a sont destinés à assurer le dégivrage du pare-brise. Le conducteur a devant les yeux le tableau de commande du dispositif représenté plus en détail à la Fig. 5.

Le caisson est fermé à sa partie supérieure par un couvercle 47 maintenu par des moyens de fixation 53 du type grenouillère ou analogue permettant d'assurer l'étanchéité du couvercle par écrasement de joints 47a (voir la Fig.2) et assurant une maintenance aisée. Dans la partie arrière, non étanche du dispositif, au moins une ouverture 43 assure
le passage de l'air de refroidissement nécessaire à la
condensation du fréon dans le condenseur 45.

La Fig.4 représente, en perspective, un dispositif selon
l'invention et l'on distingue : les volets 33,
le couvercle 47 et l'ouverture 43, le
diffuseur 49 se trouvant, après montage, à l'intérieur de
la cabine 40.

La Fig.5 représente un tableau de bord permettant la
commande du dispositif selon l'invention. Celui-ci se
trouve, comme représenté sur la Fig.3, inclus dans le
diffuseur 49. On y retrouve des éléments précédemment
mentionnnés et de la gauche vers la droite de la Fig.
le volumètre 9 dont la valeur affichée détermine le moment
où il faut changer les cellules de filtration, le toximètre
16, le commutateur 17 dont la position est déterminée par
la nature du produit que l'on épand ; les interrupteurs
21 et 22 de commande du passage de la position "confort"
à la position "sécurité", les voyants 23 et 24 de la Fig.1
étant, par exemple, incorporés dans les interrupteurs et
tout à droite le sélecteur 6 de vitesse de ventilation.
On aperçoit également un commutateur 55 de remise à zéro
du volumètre après changement de cellule, des bouches
d'aération 50. La référence 54 désigne la commande de
climatisation qui est identique à celle que l'on trouve
sur la plupart des véhicules climatisés. La référence 56
désigne des voyants de pressurisation et d'alerte éventuelle
de toxicité.

Dans la description ci-dessus on n'a mentionné l'existence
que d'une seule sonde semiconductrice de détection de la
toxicité. Comme il a été vu précédemment, un certain nombre
de commandes sont à la disposition du conducteur qui doit
jouer un rôle actif dans la protection et, notamment
décider si il utilise le régime "confort" ou le régime "sécurité" qui n'en est pas pour autant moins confortable. D'une manière générale, il est souhaitable que le conducteur du tracteur n'ait à se soucier que de la conduite de sa machine. Il est possible de rendre le fonctionnement du dispositif entièrement automatique. A cet effet, on prévoit à l'extérieur du véhicule une seconde sonde de toxicité qui, après analyse, détermine automatiquement si le niveau de pollution est tel qu'il faut passer sur le régime "sécurité" ou s'il est possible de rester en position "confort"..

Dans ce cas, le nombre d'informations que doit traiter le dispositif est plus important et l'on fait appel de préférence à un microprocesseur, bien que le traitement nécessaire puisse être effectué par des circuits classiques. L'emploi d'un microprocesseur permet également d'accroître la sécurité de fonctionnement en introduisant une troisième sonde semi-conductrice immédiatement derrière les éléments de filtration.

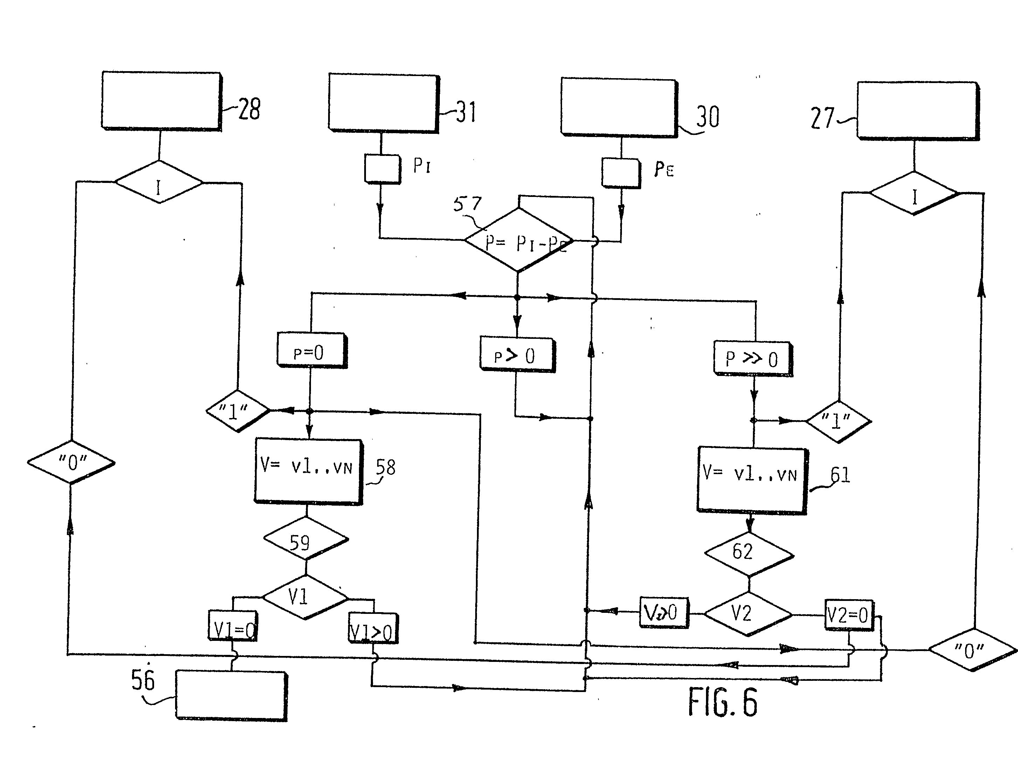

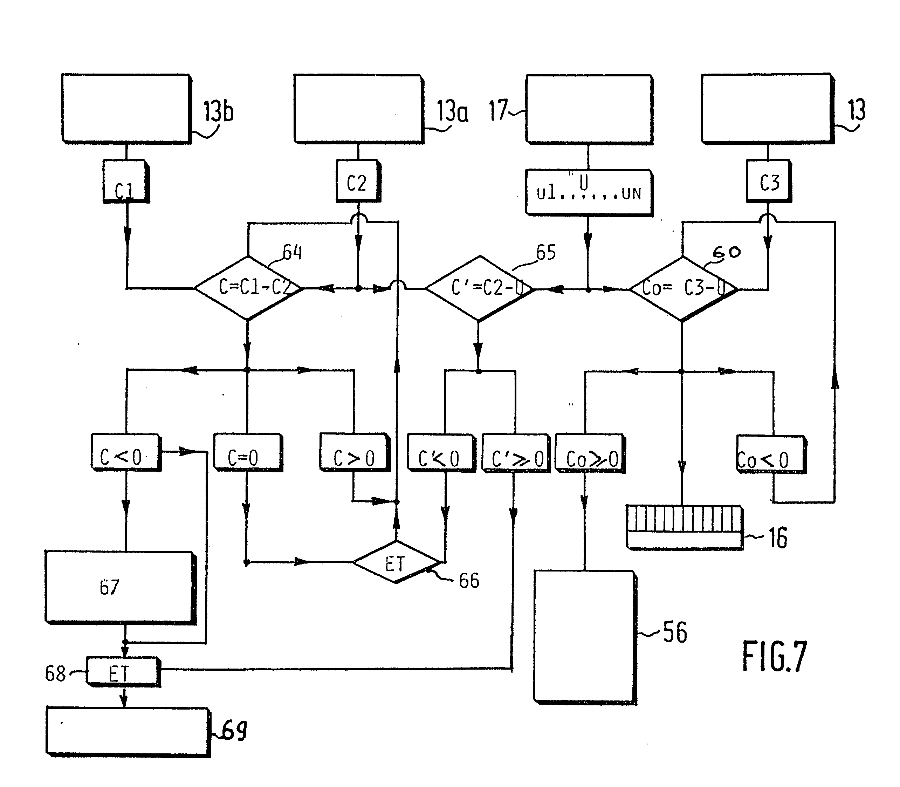

Les Figs 6 et 7 sont des ordinogrammes respectivement de pressurisation et de détection à partir desquels un électronicien peut facilement constituer un circuit approprié en fonction du micro-processeur dont il dispose. On retrouve sur la Fig.6 le capteur de pression intérieure 31 et le capteur de pression extérieure 30. Les deux capteurs 31 et 30 sont reliés à des étages Pi et Pe qui délivrent chacun un signal dont la tension est proportionnelle à la pression captée. Ces deux étages sont reliés à un comparateur 57 qui délivre une tension P = Pi - Pe. La sortie du comparateur 57 est connectée à un discriminateur qui distingue trois cas :
1°) P est supérieur à 0. Il existe une surpression dans la cabine et le résultat désiré est atteint, aucune action sur les volets n'est utile. . La valeur de P est testée périodiquement.

2°) Si P est égal à 0, l'interrupteur 28 de commande des volets de pressurisation passe à l'état 1 et parallèlement l'interrupteur de commande 27 du volet de recirculation passe à l'état "0". C'est à dire que les volets 33 s'ouvrent alors que la trappe 41 se referme. L'étage 58 déclenche le passage du moto-ventilateur 1 à la vitesse supérieure à celle initialement employée. Après temporisation de deux cricuits par l'étage 59, un signal V1 est émis qui est représentatif de la différence entre la vitesse maximale et la vitesse effective. Si le signal V1 est égal à "0", le voyant 56 ou un signal d'alarme quelconque déclenche l'alerte. Ce déclenchement est temporisé de manière à ne se produire effectivement que lorsque la nouvelle vitesse de fonctionnement a été prise en compte dans l'étage de calcul 57. Si le signal V1 est positif, la vitesse de ventilation ayant augmenté, la pression à l'intérieur de la cabine croît et la pressurisation est assurée.

3°) Si le signal P est notablement supérieur à zéro, l'interrupteur 27 de recirculation commandant la trappe 41 passe de "0" à "1" c'est à dire que la trappe s'ouvre. Conjointement, le signal "P" est appliqué à l'entrée d'un étage 61 de commande de passage du moto-ventilateur à la vitesse inférieure.

Après passage du signal de sortie 61 dans un étage de temporisation 62, un comparateur 63 délivre un signal "V2" au bout de deux minutes. Si ce signal est nul, c'est à dire si la vitesse la plus basse est atteinte, l'interrupteur de commande 28 de volets de pressurisation passe de l'état "1" à l'état "0" et ces volets se ferment. On passe alors en recyclage de l'air de la cabine.

Si le signal "V2" est positif, il est renvoyé sur l'étage 57 et au cours du prochain cycle de calcul, la nouvelle vitesse est prise en compte et elle décroît jusqu'à obtention de la vitesse minimale. La vitesse du moto-ventilateur décroît ainsi progressivement jusqu'à ce que l'équilibre recherché soit atteint. On notera que les deux régimes de fonctionnement précédemment mentionnés n'ont plus d'existence propre mais que c'est le microprocesseur qui en fonction des informations qu'il reçoit détermine la position des volets 33 et 41 et la vitesse de rotation du moto ventilateur.

La mise en route du dispositif déclenche la suite d'opérations qui vient d'être décrite.

Bien entendu, le micro-processeur prend également en charge les informations relatives au taux de toxicité conformément à l'ordinogramme qui est représenté sur la Fig.7

A la partie supérieure de la Fig. se trouvent quatre blocs 13b, 13a, 17 et 13. Ils représentent respectivement une sonde extérieure 13b, une sonde disposée derrière le groupe de filtration 13a, la sonde 13 disposée à l'intérieur de la cabine et un sélecteur de gammes 17 qui assure la même fonction que le commutateur 17 de la Fig.1.

Le sélecteur 17 émet des signaux dont les tensions correspondent chacune à un produit couramment utilisé dans l'agriculture. Cette sélection est en principe manuelle, une sélection automatique demandant une analyse des produits. Le cultivateur connaît le produit qu'il va épandre et les indications nécessaires sur la toxicité sont indiquées sur l'emballage.

Le capteur 13 émet un signal C3 qui est comparé à U dans l'étage 60. Il résulte de cette comparaison un signal Co. Le signal Co est appliqué sur le toximètre 16. Si Co est supérieur ou égal à zéro, le signal déclenche une alarme 56. Par contre, si Co est négatif, ce qui est le cas normal, le signal est ramené à l'étage 60 afin de procéder à des tests périodiques. Le toximètre 16 n'est pas nécessaire mais il permet au conducteur de contrôler en permanence l'évolution de la toxicité à l'intérieur de la cabine. Cette partie de l'ordinogramme est identique à l'étage détection de toxicité 12 de la Fig.1.

Conformément au mode particulier de réalisation représenté sur cette figure, un capteur de toxicité 13b est placé avant la cellule soit à l'extérieur de la cabine, et un second capteur 13a est disposé dans le caisson derrière la cellule de filtration.

La présence d'un capteur de toxicité 13b à l'extérieur de la cabine permet de déclencher automatiquement la pressurisation dès que la toxicité détectée atteint un certain seuil qui est justement donné par le sélecteur de gammes 17. A cet effet, une comparaison est effectuée entre C1 signal capté par 13b et l'un des signaux U1...Un présélectionné. Si C1 est supérieur à Um, la pressurisation est automatiquement déclenchée et l'on passe de la position "confort" à la position "sécurité". Cette liaison n'est pas représentée sur la Figure.

La présence du capteur 13a disposé derrière la cellule peut paraître inutile étant donné que le taux de toxicité est à priori le même derrière la cellule de filtration 35,34 et à l'intérieur de la cabine. Il n'en est rien. En effet, il peut se produire à l'intérieur de la cabine des accidents résultant par exemple de l'ouverture d'une portière modifiant brutalement le taux de toxicité intérieur, alors que le fonctionnement de la cellule de filtration reste correct. En cas de chaleur par exemple, des ions fixés sur les vitres peuvent désorber de sorte que l'atmosphère interne est modifiée. Enfin, la cellule elle-même peut désorber dans certaines conditions.

Le dispositif dont la transcription en ordinogramme est représentée sur la Fig.7 permet d'être informé à tout moment du phénomène en cause ce qui accroit très notablement la sécurité.

Les capteurs 13b et 13a délivrent des signaux C1 et C2 représentatifs de la toxicité détectée respectivement à l'extérieur de la cabine et derrière la cellule de filtration. La différence C1-C2 est testée dans l'étage 64 et un signal C est émis à la sortie de l'étage 64. Ce signal représente en fait la capacité de filtration de la cellule 34,35. Si C est supérieur à zéro (cas de fonctionnement normal) le signal est ramené sur l'étage 64 afin de procéder au test suivant. Par ailleurs, un comparateur 65 calcule un signal C' qui est égal à C2-U, U étant la tension de référence sélectionnée comme indiqué plus haut. Ce signal doit normalement être négatif. Si, il est négatif, il est appliqué sur la porte FT 66 qui reçoit par ailleurs le signal C, la présence simultanée des signaux C et C' validant la porte 66 qui dirige le signal émis sur l'étage 64. Une valeur nulle du signal C peut en effet signifier soit qu'il n'y a pas de pollution extérieure, soit que le filtre est absolument inefficace. Le signal C' permet de lever cette incertitude. Lorsque le signal C est inférieur à zéro, cela signifie que la pollution en aval de la cellule est supérieure à la pollution extérieure. Dans tous les cas, une alerte est déclenchée par l'étage 67 qui indique que la cellule doit être changée et le filtre nettoyé. Si, simultanément à ce signal C négatif, le signal C' est positif, cela signifie que la cellule de filtration désorbe et pollue l'atmosphère de la cabine. Dans ce cas, les signaux C et C' sont appliqués sur les entrées d'une porte ET 68 qui déclenche par l'étage 69 une alerte de désorption de cellule L'épandage doit alors être stoppé immédiatement et la cellule changée. L'emploi d'un microprocesseurs évite la multiplication des relais.

Les tensions U peuvent correspondre, par exemple, aux insecticides phosphorés, aux herbicides, aux herbicides nitrés et aux fongicides.

En ce qui concerne le toximètre 16, il est muni, de préférence d'un compteur à accumulation. En effet, les lésions provoquées dans l'organisme dépendent non seulement de la toxicité à un moment donné, indiquée par le toximètre, mais de l'accumulation de produits toxiques à l'intérieur de l'organisme. Un compteur, remis par exemple à zéro chaque matin, permet de calculer la quantité de produits toxiques absorbés par un même conducteur au cours d'une journée de travail et de déclencher éventuellement une alarme.

Il va de soi que de nombreuses variantes peuvent être introduites, notamment par substitution de moyens techniques équivalents, sans sortir pour celà du cadre de la présente invention.

0120753

18

REVENDICATIONS

1° Dispositif de protection pour travail en atmosphère polluée , notamment pour les cabines de conduite de tracteurs agricoles comprenant un bloc de traitement de l'air, monté ou incorporé au toit de la cabine, ce bloc étant équipé intérieurement d'au moins un élément de de filtration grossière,d'un élément de filtration physique fine et d'un élément de filtration chimique et d'un groupe motoventilateur disposé en aval des éléments de filtration, muni d'un équipement de contrôle de pressurisation et d'un détecteur de toxicité de l'air pulsé en cabine, caractérisé en ce que le détecteur de toxicité comprend au moins une sonde (13) semiconductrice et un sélecteur de tension (17) reliés à un tableau d'affichage (16).

2° Dispositif selon la revendication 1, caractérisé en ce que le bloc de traitement inclût un radiateur (49) relié au circuit de refroidissement du moteur du véhicule et un évaporateur (37) appartenant au circuit d'un climatiseur dont le compresseur est entraîné par le moteur du véhicule et dont le condenseur (45) est monté sur le toit du véhicule, à l'extérieur du bloc de traitement.

3° Dispositif selon l'une des revendications 1 ou 2, caractérisé en ce que des volets pivotants (33) sont montés à l'entrée du bloc de traitement, une canalisation (46) mettant en communication l'intérieur (40)de la cabine et une chambre (36) disposée entre le filtre physique (35) et le filtre chimique (34), ladite chambre pouvant être close par un volet (41) commandé par un organe (27b), les volets (33) étant commandés par un organe (27a), de sorte que par fermeture des volets (33) il s'établisse une circulation de l'air de la cabine en circuit fermé.

4° Dispositif selon l'une quelconque des revendications précédentes , caractérisé en ce que l'air pénètre dans la cabine par l'intermédiaire d'un diffuseur (49) comportant des ouvertures (50) réparties sur toute la périphérie du diffuseur.

5° Dispositif selon l'une des revendications précédentes, caractérisé en ce qu'une seconde sonde (13b) est disposée à l'extérieur de la cabine (40).

6° Dispositif selon la revendication 5, caractérisé en ce qu'une sonde semi-conductrice (13a) est disposée en aval de la cellule de filtration.

7° Dispositif selon l'une des revendications précédentes, caractérisé en ce que les informations recueillies par les sondes (13,13a et 13b) et les capteurs de pression (30,31) sont gérées par un microprocesseur.

8° Dispositif selon l'une quelconque des revendications 1 à 4, caractérisé en ce qu'un commutateur manuel (21,22) permet de choisir entre un régime "confort" et un régime de "sécurité".

9° Dispositif selon l'une quelconque des revendications 1 à 8, caractérisé en ce que le passage du régime "confort" au régime "sécurité" est commandé par les informations de pression données par les capteurs (30,31) et par les sondes (13,13a,13b).

0120753

FIG.1

0120753

FIG.2

FIG.4

FIG.3

FIG.5

0120753

0120753

FIG.6

FIG.7

0120753

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y,D | FR-A-2 501 340 (E. LOUBET)<br>* En entier * | 1,2 | B 60 H 3/00<br>B 60 H 1/00 |
| Y,D | DE-A-2 416 805 (DAIMLER-BENZ)<br>* Pages 8,9; figure 3 * | 1,3 | |
| A | FR-A-2 391 865 (DAIMLER-BENZ)<br>* Page 3, lignes 33-34; figure 2 * | 4 | |
| A | DE-A-2 903 643 (H. BUHR)<br>* Page 9, lignes 14-26; figure 2 * | 1,6 | |
| A | EP-A-0 042 287 (NIPPONDENSO)<br>* Pages 8-17 * | 1,6-9 | |
| A | EP-A-0 053 394 (NIPPONDENSO)<br>* Revendications 1-3 * | 1,7 | DOMAINES TECHNIQUES RECHERCHES (Int. Cl. 3)<br><br>B 60 H |
| A | EP-A-0 065 371 (NIPPONDENSO)<br>* Revendications 1,2 * | 1,7-9 | |
| A | DE-A-2 941 305 (NIPPONDENSO)<br>* Revendications 1,2 * | 1,6,7 | |
| A,P | EP-A-0 092 448 (SODICEP)<br>& FR - A - 2522791 (Cat. D) | 1 | |

Le présent rapport de recherche a été établi pour toutes les revendications

| Lieu de la recherche | Date d'achèvement de la recherche | Examinateur |
|---|---|---|
| LA HAYE | 08-06-1984 | CINQUANTINI B. |